# EUROPÄISCHE PATENTSCHRIFT

(11) **EP 0 415 492 B1**
(45) Veröffentlichungstag und Bekanntmachung des Hinweises auf die Patenterteilung: **23.11.1994**
(21) Anmeldenummer: 90202280.5
(22) Anmeldetag: 27.08.1990
(51) Int. Cl.: G11B 25/06, G11B 33/02

(54) **Aufzeichnungs- und/oder Wiedergabegerät**
Recording and/or reproducing apparatus
Appareil d'enregistement et/ou de reproduction

(30) Priorität: 29.08.1989 AT 2031/89
(43) Veröffentlichungstag der Anmeldung: 06.03.1991
(73) Patentinhaber: Philips Electronics N.V., 5621 BA Eindhoven (NL)
(72) Erfinder: Hodulik, Wolfgang, NL-5656 AA Eindhoven (NL); Ruyten, Henricus, NL-5656 AA Eindhoven (NL)
(74) Vertreter: Cuppens, Hubertus Martinus Maria

(56) Entgegenhaltungen:
- DE-A- 2 522 270
- GB-A- 2 160 696
- US-A- 3 638 934
- US-A- 3 927 888
- US-A- 4 029 269
- US-A- 4 692 828

## Beschreibung

Die Erfindung betrifft ein Aufzeichnungs- und/oder Wiedergabegerät mit einem Gehäuse und mit einem im wesentlichen plattenförmigen, zur Aufnahme von Bauteilen des Gerätes vorgesehenen Chassis, das über drei nach Art einer Dreipunktlagerung mit Abstand voneinander angeordnete Verbindungseinrichtungen mit einem mit Abstand zum Chassis parallel zu demselben verlaufenden Gehäuseteil verbunden ist.

Bei einem im Handel erhältlichen bekannten Gerät vorstehend angeführter Gattung, bei dem es sich um einen Videorecorder zum Aufzeichnen und Wiedergeben von Bild- und Tonsignalen auf bzw. von einem Magnetband handelt, weist jede Verbindungseinrichtung eine mit einem Gehäuseboden einstückig verbundene, von demselben beidseitig abstehende Befestigungshülse auf, an die einerseits geräteinnenseitig das plattenförmige Chassis angrenzt und in die andererseits von der Geräteaußenseite der eine Distanzhülse eingesetzt ist, die mit ihrem geräteinnenseitigen Ende am Chassis anliegt und an ihrem vom Chassis abgewandten anderen Ende einen Bund aufweist, zwischen dem und dem ihm zugewandten Ende der Befestigungshülse eine ringförmige Gummiplatte zum Toleranzausgleich eingefügt ist und an dem der Schraubenkopf einer durch die Distanzhülse hindurch in eine Bohrung des Chassis eingeschraubten Schraube angreift. Derartige Verbindungseinrichtungen weisen einen relativ komplizierten Aufbau auf, der einen relativ aufwendigen Montagevorgang erfordert. Weiters kann beim Verbinden des Chassis mit dem Gehäuseboden beim Einschrauben der Schrauben in die Bohrungen des Chassis aufgrund von toleranzbedingt voneinander abweichenden Positionen der Befestigungshülsen gegenüber den Positionen der Bohrungen im Chassis und bei mit dem Gehäuseboden verbundenem Chassis aufgrund von beispielsweise temperaturabhängigen unterschiedlichen Dimensionsänderungen des Gehäusebodens und des Chassis über derartige Verbindungseinrichtungen nachteiligerweise eine Übertragung von Momenten vom Gehäuseboden auf das Chassis erfolgen. Hiedurch kann es zu einer Verformung, wie einem Verwinden oder einem Verbiegen des plattenförmigen Chassis kommen, was zu einer Lageänderung der an dem Chassis angebrachten Bauteile des Gerätes führt, was eine Beeinträchtigung beziehungsweise Verschlechterung der einwandfreien Funktionsweise des Gerätes zur Folge hat. Insbesondere bei einem solchen Videorecorder ist es aber besonders wichtig, daß die unmittelbar mit dem Magnetband zusammenwirkenden Bauteile, wie Bandführungen, stationäre Magnetköpfe und eine trommelförmige, rotierend antreibbare Magnetköpfe enthaltende Abtasteinheit, stets dieselbe Relativlage gegenüber einander einnehmen, weil bereits geringfügige Lageänderungen dieser Bauteile nachteiligerweise eine Verschlechterung der Aufzeichnungs- und Wiedergabequalität zur Folge haben.

Die Erfindung hat sich zur Aufgabe gestellt, die vorstehend angeführten Schwierigkeiten zu vermeiden und mit einfachen Mitteln sicherzustellen, daß beim Verbinden des Chassis mit dem Gehäuseteil und bei mit dem Gehäuseteil verbundenem Chassis vom Gehäuse her über die Verbindungseinrichtungen keine Verformung des Chassis erfolgen kann. Hiefür ist die Erfindung dadurch gekennzeichnet, daß jede der drei Verbindungseinrichtungen einen mit dem Gehäuseteil fest verbundenen Auflageteil mit einer dem Chassis zugewandten, konvexen, kalottenförmigen Auflagefläche und ein mit dem Chassis verbundenes Gegenstück mit einer sich zum Gehäuseteil hin stetig erweiternden, rotationssymmetrischen Gegenfläche aufweist, mit der das Gegenstück an der konvexen Auflagefläche taumelbar aufliegt, und daß zwei Gegenstücke im wesentlichen in einer vorgegebenen, zum plattenförmigen Chassis parallelen Richtung gegenüber einander beweglich mit dem Chassis verbunden sind und daß das dritte Gegenstück und die beiden anderen Gegenstücke sowohl im wesentlichen in einer vorgegebenen, zum plattenförmigen Chassis parallelen Richtung als auch im wesentlichen in einer zu dieser Richtung senkrechten, zum plattenförmigen Chassis parallelen Richtung gegenüber einander beweglich mit dem Chassis verbunden sind. Auf diese Weise ist mit besonders einfachen Mitteln erreicht, daß sowohl beim Verbinden des Chassis mit dem Gehäuseteil als auch bei mit dem Gehäuseteil verbundenem Chassis die Gegenstücke am Chassis sich kräftefrei und momentenfrei in ihrer Lage an die Lage der Auflageteile am Gehäuseteil genau anpassen können und daher über die Verbindungseinrichtungen keine Übertragung von Momenten vom Gehäuse auf das Chassis erfolgen kann, so daß keine Verformung des Chassis möglich ist. Folglich können keine nachteiligen Lageänderungen von auf dem Chassis angebrachten Bauteilen auftreten, so daß stets eine einwandfreie Funktionsweise des Gerätes gewährleistet ist. Weiters ist auf diese Weise ein einfacher Montagevorgang zum Montieren des Chassis erreicht, weil das Chassis einfach in wesentlichen senkrecht zu seiner Plattenebene mit seinen Gegenstücken auf die Auflageteile aufgesetzt werden kann, wobei sich die Gegenstücke am Chassis in ihrer Lage an die Lage der Auflageteile am Gehäuseteil kräftefrei und momentenfrei genau anpassen. Ein solcher Montagevorgang ist leicht mechanisierbar, was besonders kostengünstig ist. Aufgrund der besonders einfachen Ausbilding der Verbindungseinrichtungen mit wenigen Einzelteilen ist weiters eine im Hinblick auf eine preisgünstige Herstellbarkeit vorteilhafte Ausbilding erreicht.

Es sei erwähnt, daß es aus der DE-PS 25 22 270 bekannt ist, eine erste Platte und eine zweite Platte, die aber beide auf demselben Niveau liegen, über drei Lager derart zu verbinden, daß bei einer Verwindung der zweiten Platte keine die erste Platte verformenden Kräfte auf die erste Platte übertragen werden. Dabei weisen die Lager aber einen komplizierten Aufbau auf, wobei jedes der drei Lager einen Kugelkörper und ein erstes hohlkegelförmiges Gegenstück für den Kugelkörper aufweist und weiters ein Lager ein zweites hohlkegelförmiges Gegenstück für den Kugelkörper aufweist und die beiden anderen Lager je ein durch zwei Führungsschienen gebildetes zweites Gegenstück für den Kugelkörper aufweisen. Derartige Lager sind schwierig herstellbar und daher dementsprechend teuer. Weiters ist bei Verwendung derartiger Lager ein komplizierter Montagevorgang zum Montieren der ersten Platte an der zweiten Platte erforderlich. Demgegenüber weisen die Verbindungseinrichtungen zum Verbinden des plattenförmigen Chassis und des in Abstand zum plattenförmigen Chassis parallel zu demselben verlaufenden Gehäuseteiles beim erfindungsgemäßen Gerät einen besonders einfachen Aufbau mit besonders wenigen Einzelteilen auf, was hinsichtlich einer preisgünstigen Herstellbarkeit vorteilhaft ist, und ist weiters ein einfacher Montagevorgang zum Montieren des Chassis an dem Gehäuseteil erreicht.

Bei einem erfindungsgemäßen Gerät können zwei Gegenstücke in einer ersten Richtung gegenüber einander beweglich mit dem Chassis verbunden sein und das dritte Gegenstück und die beiden anderen Gegenstücke können in einer zweiten Richtung und in der zu dieser zweiten Richtung senkrechten Richtung gegenüber einander beweglich mit dem Chassis verbunden sein. Als vorteilhaft hat sich aber erwiesen, wenn zwei Gegenstücke ausschließlich im wesentlichen in der Richtung einer Verbindungslinie zwischen diesen beiden Gegenstücken beweglich mit dem Chassis verbunden sind und das dritte Gegenstück ausschließlich im wesentlichen in einer zur Richtung dieser Verbindungslinie senkrechten Richtung beweglich mit dem Chassis verbunden ist. Dies ist im Hinblick auf eine möglichst einfache Ausbildung der beweglichen Verbindung aller drei Gegenstücke mit dem Chassis vorteilhaft, wobei für alle drei Gegenstücke dieselbe Ausbildung der beweglichen Verbindung vorgesehen werden kann.

Als vorteilhaft hat sich aber auch erwiesen, wenn ein Gegenstück unbeweglich mit dem Chassis verbunden ist und ein Gegenstück ausschließlich im wesentlichen in der Richtung einer Verbindungslinie zwischen demselben und dem unbeweglich mit dem Chassis verbundenen Gegenstück beweglich mit dem Chassis verbunden ist und das dritte Gegenstück sowohl im wesentlichen in der Richtung dieser Verbindungslinie als auch im wesentlichen in einer zur Richtung dieser Verbindungslinie senkrechten Richtung beweglich mit dem Chassis verbunden ist. Hierdurch ist vorteilhafterweise erreicht, daß nur zwei der drei Gegenstücke mit dem Chassis beweglich verbunden und ein Gegenstück einfacherweise mit dem Chassis unbeweglich, also fest verbunden ist und daß die Verbindungseinrichtung, die das mit dem Chassis fest verbundene Gegenstück aufweist, eine fixe Referenzstelle zur Positionierung des Chassis gegenüber dem Gehäuseteil bildet.

Zum beweglichen Verbinden der beweglichen Gegenstücke mit dem Chassis können die betreffenden Gegenstücke von denselben abstehende, allseitig starre Arme aufweisen, die mit ihren freien Enden am Chassis schwenkbar gelagert sind. Als besonders vorteilhaft hat sich aber erwiesen, wenn zum beweglichen Verbinden der beweglichen Gegenstücke mit dem Chassis die beweglichen Gegenstücke von denselben abstehende Arme aufweisen, die in Richtung ihrer Längserstreckung starr und in Richtung quer zu ihrer Längserstreckung elastisch nachgiebig ausgebildet sind und die mit ihren freien Enden mit dem Chassis fest verbunden sind. Dies ist hinsichtlich einer einfachen Ausbildung und einer einfachen Verbindung mit dem Chassis vorteilhaft. Dabei können die Gegenstücke samt ihren Armen aus Kunststoff bestehen und die Verbindung der Gegenstücke beziehungsweise deren Arme mit dem Chassis kann in besonders vorteilhafte Weise in Outsert-Molding-Technik erfolgen.

Die Gegenstücke können nur unter der Wirkung des Gewichtes des Chassis und der an dem Chassis angebrachten Bauteile mit ihren Gegenflächen auf den Auflageflächen der Auflageteile aufliegen, wobei aber dann nur für einen beschränkten Bereich der räumlichen Lage des Gerätes das Chassis über die Verbindungseinrichtungen mit dem Gehäuseteil sicher verbunden ist. Als vorteilhaft hat sich daher erwiesen, wenn jede Verbindungseinrichtung eine durch eine Öffnung im Chassis und eine hiezu im wesentlichen koaxiale Öffnung in dem mit dem Chassis verbundenen Gegenstück hindurchtretende, in eine Bohrung im Auflageteil eingeschraubte Schraube und ein sich an dem Schraubenkopf der Schraube abstützendes Federelement aufweist, das an dem Chassis angreift und dasselbe in Richtung zum Auflageteil hin federnd belastet, wobei das mit dem Chassis verbundene Gegenstücke mit seiner Gegenfläche mit der Kraft des Federelementes an der Auflagefläche des Auflageteiles aufliegend gehalten wird. Auf diese Weise ist unabhängig von der räumlichen Lage des Gerätes stets für eine sichere, keine Momente übertragende Verbindung des Chassis mit dem Gehäuseteil über die drei Verbindungseinrichtungen gesorgt.

Dabei hat sich als besonders vorteilhaft erwiesen, wenn der Auflageteil eine zu der Bohrung koaxiale, von demselben abstehende, durch die Öffnungen im Gegenstück und im Chassis hindurchgeführte Hülse aufweist, an deren freiem Ende sich der Schraubenkopf unter Zwischenfügung des Federelementes abstützt. Auf diese Weise ist die Einschraubtiefe für die Schraube durch die Hülse festgelegt und daher die von dem sich am Schraubenkopf abstützenden Federelement auf das Chassis ausgeübte Kraft auf einen durch die festgelegte Einschraubtiefe bestimmten, stets gleichen Wert festgelegt.

Die Gegenflächen der Gegenstücke können beispielsweise hohlkegelförmig ausgebildet sein. Als besonders vorteilhaft hat sich aber erwiesen, wenn die Gegenflächen der Gegenstücke kalottenförmig ausgebildet sind. Hiedurch wird für einen relativ großen Taumelbereich der Gegenstücke ein genaues Anpassen der räumlichen Lager der Gegenstücke an die räumliche Lage der Auflageteile erreicht.

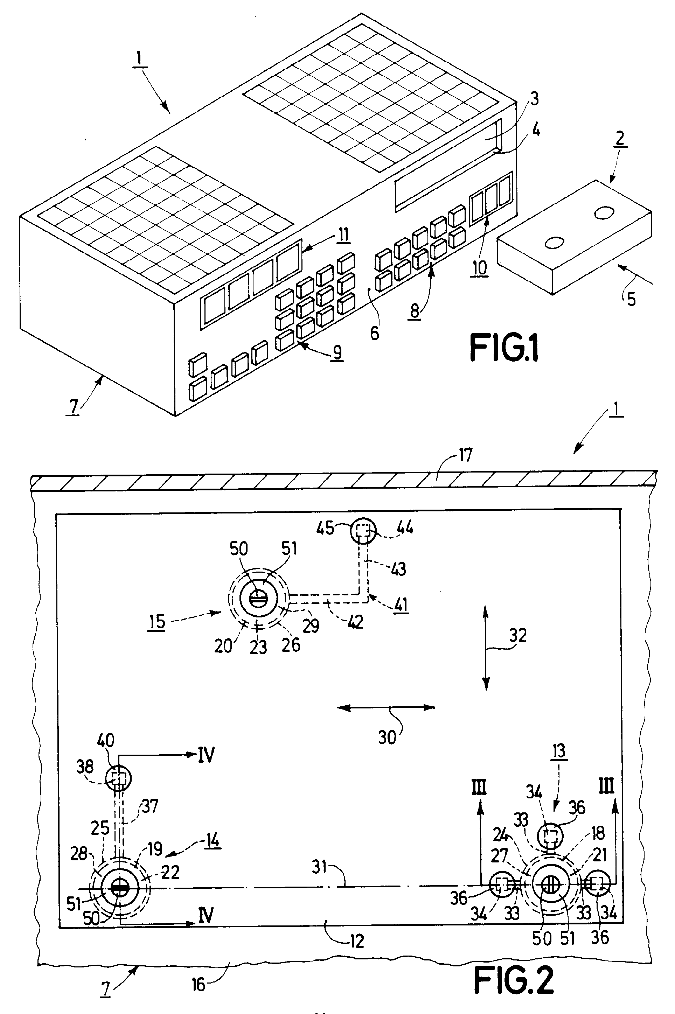

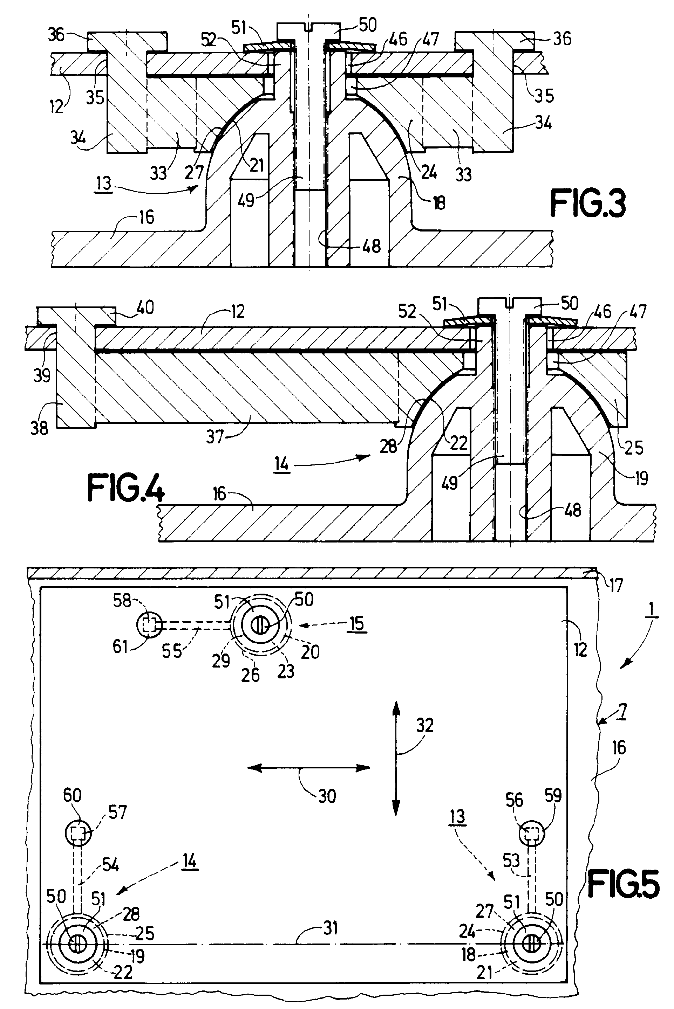

Die Erfindung wird im folgenden anhand von zwei in den Zeichnungen dargestellten Ausführungsbeispielen näher beschrieben, auf die die Erfindung jedoch nicht beschränkt sein soll. Die Fig. 1 zeigt in einem verkleinerten Maßstab schematisch in einer Schrägansicht ein Aufzeichnungs- und Wiedergabegerät für Fernsehsignale und Tonsignale, in das eine Kassette einsetzbar ist, die ein Magnetband enthält, auf dem Fernsehsignale mit Hilfe von rotierend antreibbaren Magnetköpfen in schrägen Spuren aufzeichenbar beziehungsweise von demselben wiedergebbar sind. Die Fig. 2 zeigt in schematischer Weise in Draufsicht und zum Teil im Schnitt einen Teil des Gerätes gemäß Fig. 1, der ein plattenförmiges Chassis aufweist, das mit Hilfe von drei Verbindungseinrichtungen mit dem Boden des Gehäuses des Gerätes gemäß Fig. 1 verbunden ist. Die Fig. 3 zeigt in einem Schnitt längs der Linie III-III in Fig. 2 eine von den drei Verbindungseinrichtungen des Gerätes gemäß den Figuren 1 und 2. Die Fig.4 zeigt in einem Schnitt längs der Linie IV-IV in Fig.2 eine weitere von den drei Verbindungseinrichtungen des Gerätes gemäß den Figuren 1 und 2. Die Fig.5 zeigt in analoger Weise wie die Fig.2 einen Teil eines weiteren Gerätes, der ein plattenförmiges Chassis aufweist, das ebenfalls mit Hilfe von drei Verbindungseinrichtungen mit dem Boden des Gehäuses dieses Gerätes verbinden ist.

Die Fig.1 zeigt ein Aufzeichnungs -und Wiedergabegerät 1, das zum Aufzeichnen und Wiedergeben von Fernsehsignalen und Tonsignalen auf einem Magnetband ausgebildet ist und üblicherweise kurz als Videorecorder bezeichnet wird. Das Magnetband ist in einer in Fig.1 schematisch dargestellten Kassette 2 untergebracht. Die Kassette 2 ist durch eine mit einem in das Geräteinnere hinein verschwenkbaren Deckel 3 verschließbare Öffnung 4 hindurch in Richtung des Pfeiles 5 in das Gerät 1 händisch einsetzbar. Die Öffnung 4 ist in einer Vorderwand 6 des Gehäuses 7 des Gerätes 1 vorgesehen. Beim Einsetzen der Kassette 2 in das Gerät 1 wird dieselbe in eine verstellbare Kassettenaufnahme eingeschoben, mit der die Kassette nach ihrem vollständigen Einschieben in dieselbe im wesentlichen senkrecht zu den Kassettenhauptwänden in eine Betriebslage im Gerät abgesenkt wird. In dieser Betriebslage wird die Kassette mit Hilfe von geräteseitigen Positionierstiften in ihrer Lage positioniert und es treten verstellbare Bandführungen in die Kassette ein, mit denen das Magnetband aus der Kassette herausführbar ist, wobei das Magnetband mit geräteseitigen stationären Bandführungen, stationären Magnetköpfen und einer trommelförmigen, rotierend antreibbare Magnetköpfe enthaltenden Abtasteinheit in Wirkverbindung gebracht wird. Zum einschalten von Betriebsarten des Gerätes 1, wie "Aufnahme", "Wiedergabe im normalen Vorlauf", "Wiedergabe bei Bandstillstand", "Wiedergabe im Vorlauf bei höherer Bandgeschwindigkeit", "Wiedergabe im Rücklauf bei höherer Bandgeschwindigkeit", "Schneller Vorlauf", Schneller Rücklauf" und dergleichen, weist das Gerät 1 an seiner Gehäusevorderwand 6 einen ersten Tastensatz 8 auf. Zum Programmieren des Gerätes 1 und zum Eingeben von weiteren Daten, beispielsweise zum Einstellen einer Tageszeituhr oder zum Einstellen einer vorprogrammierbaren Startzeit, weist das Gerät 1 an seiner Gehäusevorderwand 6 einen zweiten Tastensatz 9 auf. Weiters weist das Gerät 1 an seiner Gehäusevorderwand 6 zwei Anzeigeeinheiten 10 und 11 auf, deren Anzeigestellen beispielsweise je aus sieben Segmenten aufgebaut sind und die beispielsweise zum Anzeigen von Zählwerksständen eines Zählwerkes zum Messen des Bandverbrauches und zum Anzeigen von Uhrzeiten dienen.

Die vorstehend erwähnten Positionierstifte zum Positionieren einer Kassette 2 in ihrer Betriebslage im Gerät sowie die verstellbaren Bandführungen, die stationären Bandführungen, die stationären Magnetköpfe, die trommelförmige Abtasteinheit und eine Vielzahl weiterer Bauteile des Gerätes 1 sind auf einem im wesentlichen plattenförmigen Chassis 12 des Gerätes 1 montiert. Dieses Chassis 12 ist in Fig.2 schematisch dargestellt, wobei der Einfachheit halber die vorerwähnten Bauteile sowie an dem Chassis 12 weiters vorgesehene Bohrungen, Durchbrüche, Verstärkungsrippen bzw. -sicken und dergleichen nicht dargestellt sind. Das Chassis 12 besteht in vorliegendem Fall aus Stahl, es kann aber auch als Aluminum- Druckgußteil ausgebildet sein.

Das Chassis 12 ist über drei nach Art einer Dreipunktlagerung mit Abstand voneinander angeordnete Verbindungseinrichtungen 13, 14 und 15 mit dem mit Abstand zum Chassis 12 parallel zu demselben verlaufenden Boden 16 des Gehäuses 7 verbunden. In Fig.2 ist von dem Gehäuse 7 des Gerätes 1 zusätzlich zum Boden 16 auch die Gehäuserückwand 17 im Schnitt angedeutet.

Wie aus den Figuren 2, 3 und 4 ersichtlich ist, weist jede der drei Verbindungseinrichtungen 13, 14 bzw. 15 einen mit dem Boden 16 fest verbundenen Auflageteil 18, 19 bzw. 20 auf. In vorliegendem Fall sind die Auflageteile 18, 19 und 20 und der Boden 16 einstückig ausgebildet, wobei der Boden 16 und die Auflageteile 18, 19 und 20 aus Kunststoff bestehen. Die Auflageteile 18, 19 und 20 könnten aber auch als separate Teile ausgebildet sein, die beispielsweise an dem Boden des Gehäuses festgeschraubt sind. Jeder der drei Auflagteile 18, 19 und 20 ist im wesentlichen kuppelförmig ausgebildet und weist eine dem Chassis 12 zugewandte, konvexe, kalottenförmige Auflagefläche 21, 22 bzw. 23 auf. Die Auflageteile müssen keine geschlossene Kuppelform aufweisen, sondern sie könnten auch aus gleichmäßig zueinander winkelversetzten bogenförmigen Rippen bestehen, wobei alle Rippen eines Auflagteiles zusammen eine konvexe, kalottenförmige Auflagefläche ergeben.

Weiters weist jede der drei Verbindungseinrichtungen 13, 14 und 15 ein mit dem Chassis 12 verbundenes Gegenstück 24, 25 bzw. 26 mit einer sich zum Boden 16 hin stetig erweiternden, rotationssymmetrischen Gegenfläche 27, 28 bzw. 29 auf. Mit seiner Gegenfläche 27, 28 bzw. 29 liegt jedes Gegenstück 24, 25 bzw. 26 an der konvexen Auflagefläche 21, 22 bzw. 23 des betreffenden Auflageteiles 18, 19 bzw. 20 taumelbar auf. In vorliegendem Fall sind auch die Gegenflächen 27, 28 bzw. 29 der Gegenstücke 24, 25 bzw. 26 kalottenförmig ausgebildet, wodurch ein relativ großer Taumelbereich für die Gegenstücke gegenüber den Auflageteilen erreicht wird. Die Gegenflächen könnten aber auch hohlkegelförmig oder paraboloidförmig ausgebildet sein.

Von den drei Gegenstücken 24, 25 und 26 sind zwei Gegenstücke, nämlich die beiden Gegenstücke 24 und 25, im wesentlichen in einer vorgegebenen, zum plattenförmigen Chassis 12 parallelen, durch einen Doppelpfeil 30 angegebenen Richtung gegenüber einander beweglich mit dem Chassis 12 verbunden, wobei in diesem Fall die vorgegebene Richtung 30 mit der Richtung einer Verbindungslinie 31 zwischen den beiden Gegenstücken 24 und 25 übereinstimmt, was aber nicht der Fall sein muß. Von den beiden Gegenstücken 24 und 25 ist hiefür in vorliegendem Fall ein Gegenstück, nämlich das Gegenstück 24, unbeweglich mit dem Chassis 12 verbunden und das andere Gegenstück 25 ist ausschließlich im wesentlichen in der Richtung 30 der Verbindungslinie 31 zwischen dem Gegenstück 25 und dem unbeweglich mit dem Chassis verbundenen Gegenstück 24 beweglich mit dem Chassis 12 verbunden. Weiters sind das dritte Gegenstück 26 und die beiden anderen Gegenstücke 24 und 25 sowohl im wesentlichen in einer vorgebenen, zum plattenförmigen Chassis 12 parallelen, in diesem Fall mit der durch den Doppelpfeil 30 angegebenen Richtung übereinstimmenden Richtung als auch im wesentlichen in einer zu dieser Richtung 30 senkrechten, zum plattenförmigen Chassis 12 parallelen, durch einen Doppelpfeil 32 angegebenen Richtung gegenüber einander beweglich mit dem Chassis 12 verbunden. Hiefür ist in vorliegendem Fall das dritte Gegenstück 26 sowohl im wesentlichen in der Richtung 30 der Verbindungslinie 31 als auch im wesentlichen in der zur Richtung 30 der Verbindungslinie 31 senkrechten Richtung 32 beweglich mit dem Chassis 12 verbunden. Alle drei Gegenstücke 24, 25 und 26 bestehen aus Kunststoff und sind in Outsert-Molding-Technik mit dem Chassis 12 verbunden.

Zum unbeweglichen Verbinden des Gegenstückes 24 mit dem Chassis 12 weist das Gegenstück 24 drei mit demselben einstückig verbundene, seitlich abstehende, aus Kunststoff bestehende Arme 33 auf, an deren freien Enden je ein im Querschnitt viereckiger Zapfen 34 vorgesehen ist, der durch einen im Querschnitt entsprechend viereckigen Durchbruch 35 im Chassis 12 hindurchragt und an seinem durch das Chassis 12 hindurchragenden Ende mit einem im Querschnitt kreisförmigen Kopf 36 abgeschlossen ist. Das Gegenstück 24 und die Arme 33 liegen mit ihren vom Auflageteil 18 abgewandten Begrenzungsflächen an dem Chassis 12 an.

Zum beweglichen Verbinden des Gegenstückes 25 mit dem Chassis 12 weist das Gegenstück 25 einen mit demselben einstückig verbundenen, von demselben seitlich in der Richtung 32 abstehenden, aus Kunststoff bestehenden Arm 37 auf, der in Richtung seiner Längserstreckung starr und in Richtung quer zu seiner Längserstreckung elastisch nachgiebig ausgebildet ist und der mit seinem freien Ende mit dem Chassis 12 fest verbunden ist. Hiefür ist am freien Ende des Armes 37 ein im Querschnitt viereckiger Zapfen 38 vorgesehen, der durch einen im Querschnitt ensprechend viereckigen Durchbruch 38 im Chassis 12 hindurchragt und an seinem durch das Chassis 12 hindurchragenden Ende mit einem im Querschnitt kreisförmigen Kopf 40 abgeschlossen ist. Das Gegenstück 25 und der Arm 37 liegen mit ihren vom Auflageteil 19 abgewandten Begrenzungsflächen an dem Chassis 12 an.

Zum beweglichen Verbinden des dritten Gegenstückes 26 mit dem Chassis 12 weist das Gegenstück 26 einen mit demselben einstückig verbundenen, von demselben seitlich abstehenden, aus Kunststoff bestehenden Arm 41 auf, der ebenfalls in Richtung seiner Längserstreckung starr und in Richtung quer zu seiner Längserstreckung elastisch nachgiebig ausgebildet ist und der mit seinem freien Ende mit dem Chassis 12 fest verbunden ist. Der Arm 41 ist hiebei L-förmig abgewinkelt ausgebildet und weist einen in der Richtung 30 der Verbindungslinie 31 verlaufenden Armabschnitt 42 und einen in der Richtung 32 senkrecht zur Verbindungslinie 31 verlaufenden Armabschnitt 43 auf. Auf diese Weise ist das Gegenstück 26 sowohl in der Richtung 30 als auch in der hirezu senkrechten Richtung 32 gegenüber den beiden anderen Gegenstücken 24 und 25 beweglich mit dem Chassis 12 verbunden. Am freien Ende des Armabschnittes 43 des Armes 41 ist ebenfalls ein im Querschnitt viereckiger Zapfen 44 vorgesehen, der durch einen im Querschnitt entsprechend viereckigen Durchbruch im Chassis 12 hindurchragt und an seinem durch das Chassis 12 hindurchragenden Ende mit einem im Querschnitt kreisförmigen Kopf 45 abgeschlossen ist. Das Gegenstück 26 und der Arm 41 liegen mit ihren vom Auflageteil 20 abgewandten Begrenzungsflächen an dem Chassis 12 an.

Jede Verbindungseinrichtung 13, 14 bzw. 15 weist eine durch eine Öffnung 46 im Chassis 12 und eine hiezu im wesentlichen koaxiale Öffnung 47 in dem mit dem Chassis 12 verbundenen Gegenstück 24, 25 bzw. 26 hindurchtretende, in eine Bohrung 48 im Auflageteil 18, 19 bzw. 20 eingeschraubte Schraube 49 und ein sich an dem Schraubenkopf 50 der Schraube 49 abstützendes Federelement 51 auf. Das Federelement 51 ist hier als Tellerfeder ausgebildet, es könnte aber beispielsweise auch als spiralförmige Druckfeder ausgebildet sein. Das Federelemement 51 greift an dem Chassis 12 an und belastet das Chassis 12 federnd in Richtung zum Auflageteil 18, 19 bzw. 20 hin, wobei das mit dem Chassis 12 verbundene, an dem Chassis 12 anliegende Gegenstück 24, 25 bzw. 26 mit seiner Gegenfläche 27, 28 bzw. 29 mit der Kraft des Federelementes 51 an der Auflagefläche 21, 22 bzw. 23 des Auflageteiles 18, 19 bzw. 20 aufliegend gehalten wird. Dabei weist jeder Auflageteil 18, 19 bzw. 20 eine zu der Bohrung 48 koaxiale, von demselben abstehende, durch die Öffnungen 47 und 46 im Gegenstück 24, 25 bzw. 26 und im Chassis 12 hindurchgeführte Hülse 52 auf, an deren etwas über das Niveau des Chassis hinausragendem freiem Ende sich der Schraubenkopf 50 unter Zwischenfügung des Federelementes 51 abstützt.

Zum Montieren des Chassis 12 am Boden 16 des Gehäuses 7 des Gerätes 1 wird das Chassis 12 einfach senkrecht zu seiner Plattenebene mit seinen Gegenstücken 24, 25 und 26 auf die Auflageteile 18, 19 und 20 aufgesetzt, was vorteilhafterweise in einem mechanisierten Vorgang erfolgen kann. Dabei bildet die Verbindungseinrichtung 13, die das mit dem Chassis 12 fest verbundene Gegenstück 24 aufweist, eine fixe Referenzstelle zur Positionierung des Chassis 12 gegenüber dem Boden 16 des Gehäuses 7 des Gerätes 1. Die Gegenstücke 25 und 26 der beiden anderen Verbindungseinrichtungen 14 und 15 können sich dabei, da sie auf vorstehend beschriebene Weise gegenüber dem Gegenstück 24 und gegenüber einander beweglich mit dem Chassis 12 verbunden sind, in ihrer räumlichen Lage kräftefrei und momentenfrei an die Lage der betreffenden Auflageteile 19 und 20 anpassen, so daß beim Aufsetzen der Gegenstücke 24, 25 und 26 auf die Auflageteile 18, 19 und 20 keine Momente auf das Chassis 12 übertragen werden und daher keine Verformung des Chassis 12 auftreten kann. Nach dem Aufsetzen der Gegenstücke 24, 25 und 26 auf die Auflageteile 18, 19 und 20 werden nach vorherigem Aufsetzen der Federelemente 51 die Schrauben 49 in die Bohrungen 48 eingeschraubt, was vorteilhafterweise ebenfalls in einem mechanisierten Vorgang erfolgen kann. Das Einschrauben der Schrauben 49 erfolgt so tief, bis sich die Schraubenköpfe 50 unter Zwischenfügung der Federelemente 51 an den freien Enden der Hülsen 52 der Auflageteile 18, 19 und 20 abstützen. Auf diese Weise ist unabhängig von der räumlichen Lage des Gerätes 1 stets für eine sichere, keine Momente übertragende Verbindung des Chassis 12 mit dem Boden 16 des Gehäuses 7 über die drei Verbindungseinrichtungen 13, 14 und 15 gesorgt. Da sich die Schraubenköpfe 50 unter Zwischenfügung der Federelemente 51 an den freien Enden der Hülsen 52 abstützen, ist die Einschraubtiefe für die Schrauben 49 genau festgelegt und daher sind die von den sich an den Schraubenköpfen 50 abstützenden Federelementen 51 auf das Chassis 12 ausgeübten Kräfte auf durch die festgelegte Einschraubtiefe bestimmte, stets gleiche Werte festgelegt. Aufgrund der vorstehend beschriebenen Ausbildung der drei Verbindungseinrichtungen 13, 14 und 15 können sich auch bei mit dem Boden 16 bereits verbundenem Chassis 12 die Gegenstücke 24, 25 und 26 stets in ihrer Lage an die Lage der Auflageteile 18, 19 und 20 momentenfrei anpassen, so daß keine Verformung des Chassis 12 auftreten kann. Dies ist zum Ausgleich von temperaturabhängigen unterschiedlichen Dimensionsänderungen des Gehäusebodens 16 und des mit demselben verbundenen Chassis 12 von Wichtigkeit. Da wie erwähnt weder beim Montieren des Chassis 12 am Gehäuseboden 16 noch bei bereits mit dem Gehäuseboden 16 verbundenem Chassis 12 eine Verformung des Chassis 12 auftreten kann, ist erreicht, daß die am Chassis 12 vorgesehenen Bauteile stets in denselben Relativlagen gegenüber einander verbleiben, wodurch stets eine einwandfreie Funktionsweise des Gerätes 1 gewährleistet ist. Dies ist besonders bei einem Videorecorder von großer Bedeutung, da bei einem solchen Gerät bereits geringfügige Änderungen der Relativlage beispielsweise der Bandführungen gegenüber der trommelförmigen Abtasteinheit oder gegenüber den stationären Magnetköpfen zu empfindlichen Qualitätseinbußen beziehungsweise zu Störungen beispielsweise bei der Wiedergabe der Fernsehsignale führen.

In Fig.5 ist ein Aufzeichnungs- und Wiedergabegerät 1 gemäß einem anderen Ausführungsbeispiel dargestellt, dessen plattenförmiges Chassis 12 über drei Verbindungseinrichtungen 13, 14 und 15 mit dem Boden 16 des Gehäuses 7 des Gerätes 1 verbunden sind. Jede dieser drei Verbindungseinrichtungen 13, 14 und 15 weist ebenfalls einen Auflageteil 18, 19 bzw. 20 mit einer dem Chassis 12 zugewandten, konvexen, kalottenförmigen Auflagefläche 21, 22 bzw. 23 und ein mit dem Chassis 12 verbundenes Gegenstück 24, 25 bzw. 26 mit einer sich zum Boden 16 hin stetig erweiterten, rotationssymmetrischen, kalottenförmigen Gegenfläche 27, 28 bzw. 29 auf.

Bei dem Gerät gemäß Fig. 5 sind zwei Gegenstücke, nämlich die beiden Gegenstücke 24 und 25, ausschließlich im wesentlichen in der Richtung 30 einer Verbindungslinie 31 zwischen diesen beiden Gegenstücken 24 und 25 beweglich mit dem Chassis 12 verbunden und ist das dritte Gegenstück 26 ausschließlich im wesentlichen in einer zur Richtung 30 dieser Verbindungslinie 31 senkrechten Richtung 32 beweglich mit dem Chassis 12 verbunden.

Zum beweglichen Verbinden der drei Gegenstücke 24, 25 und 26 mit dem Chassis 12 weist jedes der drei Gegenstücke einen mit demselben einstückig verbundenen, von demselben seitlich abstehenden, aus Kunststoff bestehenden Arm 53, 54 bzw. 55 auf. Die freien Enden der Arme 53, 54 und 55 sind in derselben Weise wie beim Gerät gemäß den Figuren 1 bis 4 über viereckige Zapfen 56, 57 und 58 mit kreisförmigen Köpfen 59, 60 und 61 mit dem Chassis 12 fest verbunden. Die Arme 53, 54 und 55 sind in Richtung ihrer Längserstreckung starr und in Richtung quer zu ihrer Längserstreckung elastisch nachgiebig ausgebildet. Die Arme 53 und 54 der beiden Gegenstücke 24 und 25 verlaufen in der Richtung 32 senkrecht zur Verbindungslinie 31 zwischen den beiden Gegenstücken 24 und 25, so daß diese beiden Gegenstücke 24 und 25 im wesentlichen in der Richtung 30 der Verbindungslinie 31 gegenüber einander beweglich mit dem Chassis 12 verbunden sind. Der Arm 55 des dritten Gegenstückes 26 verläuft in der Richtung 30 der Verbindungslinie 31, so daß das dritte Gegenstück 26 und die beiden anderen Gegenstücke 24 und 25 sowohl im wesentlichen in der Richtung 30 der Verbindungslinie 31 als auch im wesentlichen in der zu der Richtung 30 der Verbindungslinie 31 senkrechten Richtung 32 einander gegenüber beweglich mit dem Chassis 12 verbunden sind.

Bei dem Gerät gemäß Fig.5 weist, genauso wie dies bei dem Gerät gemäß den Figuren 1 bis 4 der Fall ist, jede Verbindungseinrichtung 13, 14 bzw. 15 eine durch eine Öffnung im Chassis 12 und eine hiezu im wesentlichen koaxiale Öffnung in dem mit dem Chassis 12 verbundenen Gegenstück 24, 25 bzw. 26 hindurchtretende, in eine Bohrung im Auflageteil 18, 19 bzw. 20 eingeschraubte Schraube und ein sich an dem Schraubenkopf 50 der Schraube abstützendes Federelement 51 auf.

Auch bei dem Gerät gemäß Fig.5 ist aufgrund der vorstehend beschriebenen Ausbildung der drei Verbindungseinrichtungen 13, 14 und 15 gewährleistet, daß sowohl beim Verbinden des Chassis 12 mit dem Boden 16 des Gehäuses 7 als auch bei mit dem Boden 16 verbundenem Chassis 12 keine Verformung des Chassis 12 auftreten kann, so daß keine Änderungen der Relativlagen zwischen den auf dem Chassis vorgesehenen Bauteilen auftreten können und daher stets eine einwandfreie Funktionsweise des Gerätes gewährleistet ist.

Die Erfindung ist nicht auf die vorstehend beschriebenen Ausführungsbeispiele beschränkt. So könnten anstelle der über ihre gesamte Länge in Richtung quer zu ihrer Längserstreckung elastisch nachgiebig ausgebildeten Arme zum beweglichen Verbinden der beweglichen Gegenstücke mit dem Chassis auch an sich allseitig starre, aber mit Filmscharnieren versehene Arme vorgesehen sein. Die Erfindung ist nicht nur bei wie vorstehend beschriebenen Videorecordern vorteilhaft anwendbar, sondern beispielsweise auch bei anderen Aufzeichnungs- und/oder Wiedergabegeräten, wie Compact-Disc-Spielern und Magnetbandrecordern zum Aufzeichnen und Wiedergeben von analogen oder digitalen Tonsignalen.

## Patentansprüche

1. Aufzeichnungs- und/oder Wiedergabegerät mit einem Gehäuse (7) und mit einem im wesentlichen plattenförmigen, zur Aufnahme von Bauteilen des Gerätes vorgesehenen Chassis (12), das über drei nach Art einer Dreipunktlagerung mit Abstand voneinander angeordnete Verbindungseinrichtungen (13, 14, 15) mit einem mit Abstand zum Chassis (12) im wesentlichen parallel zu demselben verlaufenden Gehäuseteil (16) verbunden ist, dadurch gekennzeichnet, daß jede der drei Verbindungseinrichtungen (13, 14, 15) einen mit dem Gehäuseteil (16) fest verbundenen Auflageteil (18, 19, 20) mit einer dem Chassis (12) zugewandten, konvexen, kalottenförmigen Auflagefläche (21, 22, 23) und ein mit dem Chassis (12) verbundenes Gegenstück (24, 25, 26) mit einer sich zum Gehäuseteil (16) hin stetig erweiternden, rotationssymmetrischen Gegenfläche (27, 28, 29) aufweist, mit der das Gegenstück (24, 25, 26) an der konvexen Auflagefläche (21, 22, 23) taumelbar aufliegt, und daß zwei Gegenstücke (24, 25) im wesentlichen in einer vorgegebenen, zum plattenförmigen Chassis (12) parallelen Richtung gegenüber einander beweglich mit dem Chassis (12) verbunden sind und daß das dritte Gegenstück (26) und die beiden anderen Gegenstücke (24, 25) sowohl im wesentlichen in einer vorgegebenen, zum plattenförmigen Chassis (12) parallelen Richtung als auch im wesentlichen in einer zu dieser Richtung senkrechten, zum plattenförmigen Chassis (12) parallelen Richtung gegenüber einander beweglich mit dem Chassis (12) verbunden sind.

2. Gerät nach Anspruch 1, dadurch gekennzeichnet, daß zwei Gegenstücke (24, 25) ausschließlich im wesentlichen in der Richtung (30) einer Verbindungslinie (31) zwischen diesen beiden Gegentücken (24, 25) beweglich mit dem Chassis (12) verbunden sind und das dritte Gegenstück (26) ausschließlich im wesentlichen in einer zur Richtung dieser Verbindungslinie (31) senkrechten Richtung (32) beweglich mit dem Chassis (12) verbunden ist.

3. Gerät nach Anspruch 1, dadurch gekennzeichnet, daß ein Gegenstück (24) unbeweglich mit dem Chassis (12) verbunden ist und ein Gegenstück (25) ausschließlich im wesentlichen in der Richtung (30) einer Verbindugslinie (31) zwischen demselben und dem unbeweglich mit dem Chassis (12) verbundenen Gegenstück (24) beweglich mit dem Chassis (12) verbunden ist und daß das dritte Gegenstück (26) sowohl im wesentlichen in der Richtung (30) dieser Verbindungslinie (31) als auch im wesentlichen in einer zur Richtung dieser Verbindungslinie senkrechten Richtung (32) beweglich mit dem Chassis verbunden ist.

4. Gerät nach einem der vorhergehenden Ansprüche, dadurch gekennzeichnet, daß zum beweglichen Verbinden der beweglichen Gegenstücke (24, 25, 26) mit dem Chassis (12) die beweglichen Gegenstücke (24, 25, 26) von denselben abstehende Arme (37, 41, 53, 54, 55) aufweisen, die in Richtung ihrer Längserstreckung starr und in Richtung quer zu ihrer Längserstreckung elastisch nachgiebig ausgebildet sind und die mit ihren freien Enden mit dem Chassis (12) fest verbunden sind.

5. Gerät nach einem der vorhergehenden Ansprüche, dadurch gekennzeichnet, daß jede Verbindungseinrichtung (13, 14, 15) eine durch eine Öffnung (46) im Chassis (12) und eine hiezu im wesentlichen koaxiale Öffnung (47) in dem mit dem Chassis (12) verbundenen Gegenstück (24, 25, 26) hindurchtretende, in eine Bohrung (48) im Auflageteil (18, 19, 20) eingeschraubte Schraube (49) und ein sich an dem Schraubenkopf (50) der Schraube (49) abstützendes Federelement (51) aufweist, das an dem Chassis (12) angreift und dasselbe in Richtung zum Auflageteil (18, 19, 20) hin federnd belastet, wobei das mit dem Chassis (12) verbundene Gegenstück (24, 25, 26) mit seiner Gegenfläche (27, 28, 29) mit der Kraft des Federelementes (51) an der Auflagefläche (21, 22, 23) des Auflageteiles (18, 19, 20) aufliegende gehalten wird.

6. Gerät nach Anspruch 5, dadurch gekennzeichnet, daß der Auflageteil (18, 19, 20) eine zu der Bohrung (48) koaxiale, von demselben abstehende, durch die Öffnungen (46, 47) im Gegenstück (24, 25, 26) und im Chassis (12) hindurchgeführte Hülse (52) aufweist, an deren freiem Ende sich der Schraubenkopf (50) unter zwischenfügung des Federelementes (51) abstützt.

7. Gerät nach einem der vorhergehenden Ansprüche, dadurch gekennzeichnet, daß die Gegenflächen (27, 28, 29) der Gegenstücke (24, 25, 26) kalottenförmig ausgebildet sind.

## Claims

1. A recording and/or reproducing apparatus having a housing (7) and having a substantially plate-shaped chassis (12) for accommodating parts of the apparatus, which chassis is connected to a housing part (16) by three connecting devices (13, 14, 15) arranged at a distance from one another as a three-point support, which housing part is spaced from and extends substantially parallel to the chassis (12), characterised in that each of the three connecting devices (13, 14, 15) has a supporting element (18, 19, 20) fixedly connected to the housing part (16) and having a convex dome-shaped supporting surface (21, 22, 23) facing the chassis (12), and a counter-element (24, 25, 26) connected to the chassis (12) and having a rotationally symmetrical mating surface (27, 28, 29) which widens continuously towards the housing part (16), with which mating surface the counter-element pivotably engages with the convex supporting surface (21, 22, 23), in that two counter-elements (24, 25) are connected to the chassis (12) so as to be movable relative to one another substantially in a given direction parallel to the plate-shaped chassis (12), and in that the third counter-element (26) and the two other counter-elements (24, 25) are connected to the chassis (12) so as to be movable relative to one another substantially in a given direction parallel to the plate-shaped chassis (12) as well as substantially in a direction perpendicular to the said given direction and parallel to the plate-shaped chassis (12).

2. An apparatus as claimed in Claim 1, characterised in that two counter-elements (24, 25) are connected to the chassis (12) so as to be exclusively movable substantially in the direction (30) of a connecting line (31) between these two counter-elements (24, 25), and the third counter-element (26) is connected to the chassis (12) so as to be exclusively movable substantially in a direction perpendicular to the direction of this connecting line.

3. An apparatus as claimed in Claim 1, characterised in that one counter-element (24) is immovably connected to the chassis (12) and one counter-element (25) is connected to the chassis (12) so as to be exclusively movable substantially in the direction (30) of a connecting line (31) between itself and the counter-element (24) which is immovably connected to the chassis (24), and in that the third counter-element (26) is connected to the chassis so as to be movable substantially in the direction (30) of this connecting line (31) as well as substantially in a direction (32) perpendicular to the direction of this connecting line.

4. An apparatus as claimed in any one of the preceding Claims, characterised in that for movably connecting the movable counter-elements (24, 25, 26) to the chassis (24) the movable counter-elements (24, 25, 26) have arms (37, 41, 53, 54, 55) projecting from them, which arms are constructed to be rigid in the direction of their longitudinal extension and to be elastically flexible in the direction transverse to their longitudinal extension, and are fixedly connected to the chassis (12) by their distal ends.

5. An apparatus as claimed in any one of the preceding Claims, characterised in that each connecting device (13, 14, 15) has a screw (49), which is fitted into a bore (42) in the supporting element (18, 19, 20) and extends through an opening (46) in the chassis (12) and through a substantially coaxial opening (47) in the counter-element (24, 25, 26) connected to the chassis (12), and a spring element (51), on which the screw head (50) of the screw (49) is supported and which engages on the chassis (12) to urge the latter resiliently towards the supporting element (18, 19, 20),
the force of the spring element (51) holding the counter-element (24, 25, 26), which is connected to the chassis (12), in engagement with the supporting surface (21, 22, 23) of the supporting element (18, 19, 20) by its mating surface (27, 28, 29).

6. An apparatus as claimed in Claim 5, characterised in that the supporting element (18, 19, 20) has a sleeve (52) projecting from it, which sleeve is coaxial with the bore (48), extends through the openings (46, 47) in the counter-element (24, 25, 26) and in the chassis (12), and has a free end supporting the screw head (50) *via* the interposed spring element (51).

7. An apparatus as claimed in any one of the preceding Claims, characterised in that the mating surfaces (27, 28, 29) of the counter-elements (24, 25, 26) are dome-shaped.

## Revendications

1. Appareil d'enregistrement et/ou de reproduction muni d'un boîtier (7) et d'un châssis (12) essentiellement en forme de plaque et prévu pour la réception de composants de l'appareil, châssis qui est relié par l'intermédiaire de trois dispositifs de raccordement (13, 14, 15) espacés comme un montage à trois points à une partie de boîtier (16) s'étendant de façon espacée et essentiellement parallèle par rapport audit châssis, caractérisé en ce que chacun des trois dispositifs de raccordement (13, 14, 15) présente une partie de support (18, 19, 20) reliée rigidement à la partie de boîtier (16) et munie d'une surface de support convexe en forme de calotte (21, 22, 23) située vis-à-vis du châssis (12) et une contre-pièce (24, 25, 26) reliée au châssis (12) et présentant une contre-surface à symétrie de révolution (27, 28, 29) qui s'évase continuellement vers la partie de boîtier (16) et avec laquelle la contre-pièce (24, 25, 26) repose de façon à pouvoir basculer sur la surface de support convexe (21, 22, 23), et que deux contre-pièces (24, 25) sont reliées d'une façon mobile l'une par rapport à l'autre au châssis (12) essentiellement dans une direction déterminée parallèle au châssis en forme de plaque (12) et que la troisième contre-pièce (26) et les deux autres contre-pièces (24, 25) sont reliées, d'une façon mobile, les unes par rapport aux autres, au châssis (12) essentiellement dans une direction déterminée parallèle au châssis en forme de plaque (12) ainsi qu'essentiellement dans une direction perpendiculaire à cette derrière direction parallèle au châssis en forme de plaque (12).

2. Appareil selon la revendication 1, caractérisé en ce que deux contre-pièces (24, 25) sont reliées de façon mobile, au châssis exclusivement essentiellement dans la direction (30) d'une ligne de jonction (31) entre ces deux contre-pièces (24, 25) et la troisième contre-pièce (26) est reliée, de façon mobile, au châssis (12) exclusivement essentiellement dans la direction (32) perpendiculaire à la direction de cette ligne de jonction (31).

3. Appareil selon la revendication 1, caractérisé en ce qu'une contre-pièce (24) est reliée de façon immobile au châssis (12) et une contre-pièce (25) est reliée de façon mobile au châssis (12) exclusivement essentiellement dans la direction (30) d'une ligne de jonction (31) entre ladite contre-pièce (25) et la contre-pièce (24) reliée de façon immobile au châssis (12) et en ce que la troisième contre-pièce (26) est reliée de façon mobile au châssis tant essentiellement dans la direction (30) de cette ligne de jonction (31) qu'aussi essentiellement dans une direction (32) perpendiculaire à la direction de cette ligne de jonction.

4. Appareil selon l'une des revendications précédentes, caractérisé en ce que pour la jonction mobile des contre-pièces mobiles (24, 25, 26) au châssis (12), les contre-pièces mobiles (24, 25, 26) présentent des bras saillants (37, 41, 53, 54, 55) qui sont formés de façon rigide dans la direction de leur étendue longitudinale et de façon flexible dans une direction perpendiculaire à leur étendue longitudinale et dont les extrémités libres sont fixées au châssis (12).

5. Appareil selon l'une des revendications précédentes, caractérisé en ce que chaque dispositif de raccordement (13, 14, 15) est muni d'une vis (49) qui traverse une ouverture (46) ménagée dans le châssis (12) et une ouverture (47) essentiellement coaxiale par rapport à cette dernière ménagée dans la contre-pièce (24, 25, 26) reliée au châssis (12) et qui est vissée dans un forage (42) dans la partie de support (18, 19, 20) et d'un élément à ressort (51) reposant sur la tête (50) de la vis (49) et agissant sur le châssis (12) pour le charger de façon élastique dans la direction de la partie de support (18, 19, 20), la contre-pièce (24, 25, 26) reliée au châssis (12) étant maintenue appliquée par sa contre-surface 27, 28, 29 sous l'effet de l'élément à ressort (51) sur la surface de support (21, 22, 23) de la partie de support (18, 19, 20).

6. Appareil selon la revendication 5, caractérisé en ce que la partie de support (18, 19, 20) présente une douille (52) saillant de cette dernière, coaxiale par rapport au forage (48) et traversant les ouvertures (46, 47) ménagées dans la contre-pièce (24, 25, 26) et le châssis (12), sur l'extrémité libre de laquelle repose la tête de vis (50) avec interposition de l'élément à ressort (51).

7. Appareil selon l'une des revendications précédentes, caractérisé en ce que les contre-surfaces (27, 28, 29) des contre-pièces (24, 25, 26) sont sous forme de calotte.
